# EUROPEAN PATENT SPECIFICATION

(11) **EP 0 275 361 B1**
(45) Date of publication and mention of the grant of the patent: **05.01.1994**
(21) Application number: 87113053.0
(22) Date of filing: 07.09.1987
(51) Int. Cl.: G05D 7/01

(54) **Mass flow rate regulator**
Massen-Durchflussregler
Régulateur du débit massique

(30) Priority: 20.01.1987 US 4519
(43) Date of publication of application: 27.07.1988
(73) Proprietor: ROCKWELL INTERNATIONAL CORPORATION, El Segundo California 90245 (US)
(72) Inventor: Nielsen, Thomas LeRoy, Granada Hills California 91344 (US)
(74) Representative: Wächtershäuser, Günter, Prof. Dr.

(56) References cited:
- US-A- 2 731 974
- US-A- 2 829 492
- US-A- 2 917 067
- US-A- 3 448 922
- US-A- 3 659 783
- US-A- 4 250 914

## Description

This invention relates to a propellant feed system for a rocket engine.

Pressure regulators that simply control pressure are normally suitable for flow control where there are small temperature fluctuations. Under these conditions, such pressure regulators establish satisfactory and predictable flows. However, these pressure regulators, in only controlling pressure do not compensate for changes in density that occur with temperature changes. In systems, such as the feed system for a fluid fueled rocket engine combustor, where large temperature variations occur, the flow regulators require commensurate monitoring of fluid density changes in order to maintain the desired mass flow rate.

The typical scenario for the feed system for a fluid fueled rocket engine combustor is as follows:
The rocket propellants, hydrogen (H₂) and oxygen (O₂), are stored (and supplied) in tanks that are initially at high pressure and low temperature (2000 psi and 200° R). The pressure and temperature change as the contents of the tanks are consumed and heated during operation (to 300 psi and 600°R). The propellant supply can easily be controlled to a constant feed pressure of 300 psi, but the temperature change of the regulated gas could change the density by a factor of three.

The conventional method for compensating for the density change due to temperature involves utilization of a servo valve control. However, this method involves utilization of a servo valve control. However, this method involves actuators, a power source, control logic, complex control valves, external feedback signals and control circuitry. On rocket engines for future space programs, such as the Space Station Program, several combustors will be required. Therefore, weight limitations as well as the complexity involved in attempting to utilize several servo valve controls makes a stand-alone, mechanical regulator appealing.

In Figure 1 of U. S. Patent No. 4,522,219 issued to I. Ohkata a conventional exhaust valve is shown for exhausting condensed water of steam for a Diesel locomotive which travels in a cold environment. In this valve, fluid flows freely from a steam feed pipe into a valve body. The valve body contains a bellows connected to a rod. The lower end of the rod contains a valve element which opens an exhaust port when the bellows is contracted and closes the exhaust port when the bellows is expanded. When the steam from the feed pipe is partly cooled to produce condensed water, the water flows into the valve body. The relatively cool water cools and contracts the bellows. The valve element therefore moves up opening the exhaust port and allowing the discharge of condensed water.

US-A-2 829 492 describes a manually operable valve for the fluid flow control in rocket supply lines. It does not teach a system for automatically maintaining the flow constant, independent from changes of temperature and pressure.

US-A-3 659 783 describes a temperature-dependent valve whereby the lowering of the temperature of a fluid flowing through a valve causes a contraction of a bellows which again causes a valve opening to be constricted. It does not teach a servo function for keeping the mass flow constant.

Therefore, it is the problem of the invention to provide a propellant feed system for a rocket engine which automatically maintains the mass flow rate of a fluid independent of changes of pressure and temperature, which is mechanically simple and provides a fast thermal response time and which is self-contained, thus eliminating electrical controls.

The problem is solved by the propellant feed system of Claim 1.

In its broadest aspects the invention comprises a housing defining a chamber. The housing has a surface which forms an entrance opening for introducing a supply of fluid to the chamber. The housing also has an exit opening for providing for discharge of the fluid from the chamber. A sealed and pressurized bellows is contained within the chamber and is in heat exchange communication with the fluid flowing through the chamber. The bellows contains a fluid with the same or similar thermodynamic characteristics as the fluid being regulated. A poppet is also located within the chamber and is attached to and adapted to change its position in response to changes in the elongation of the bellows. One end of the poppet terminates with a poppet head which extends into the entrance opening. The housing surface which forms the entrance opening and the poppet head cooperatively define a fluid passageway. The area of the fluid passageway is effected by the position of the poppet head. During operation, when the mass flow rate of fluid flowing through the chamber is effected by either a change in pressure or a change in temperature, a corresponding change takes place in the sealed bellows thus repositioning the poppet accordingly and resulting in the self-regulation of the mass flow rate of the fluid flowing through the regulator.

In its narrower aspects, the housing further defines a second chamber located upstream the first chamber and adjacent the first chamber. This second chamber contains spring bias means for biasing the poppet toward an open position.

### Brief Description of the Drawings

Figure 1 is a schematic illustration of the preferred embodiment of the apparatus of the present invention including spring bias means.

Figure 2 is another embodiment of the invention which does not utilize a spring bias means.

The same elements or parts throughout the figures are designated by the same reference characters.

### Detailed Description of the Invention

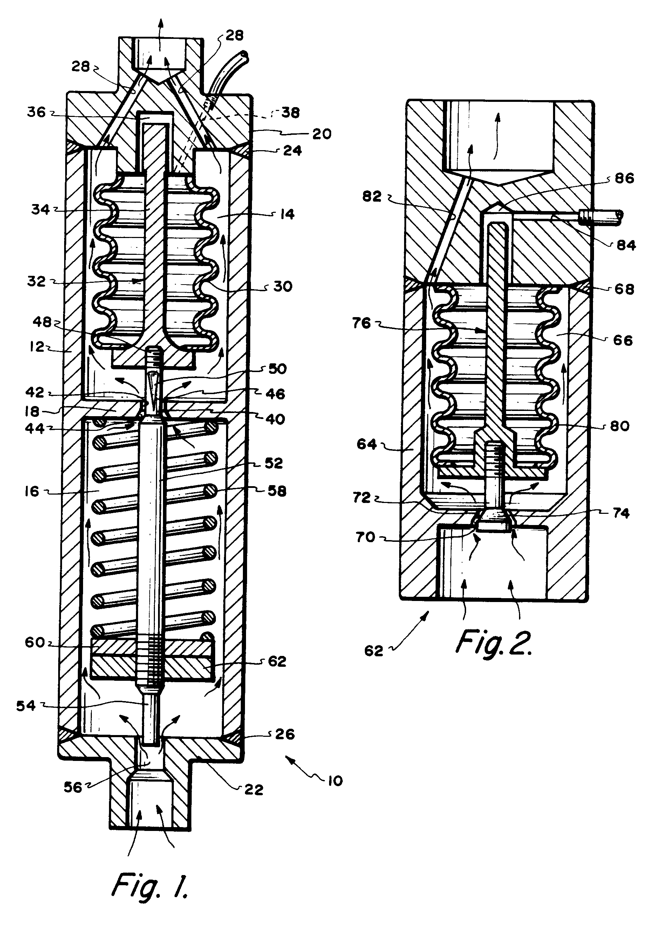

Referring to Fig. 1, a preferred embodiment of the present invention is designated generally as 10. The constant mass flow rate regulator includes a substantially cylindrical housing 12. The housing 12 is partitioned to define a downstream or upper chamber 14 and an upstream or lower chamber 16. The housing 12 contains a partitioning portion 18 which forms a circular entrance opening for the introduction of a supply flow of fluid to the upper chamber.

For ease of manufacture the housing 12 has end caps 20,22 which are welded, at locations 24,26 to the main body of the housing 12. The downstream end 20 of the housing 12 has exit openings 28 for discharge of the fluid from the chamber 14 after it has been regulated. A bellows 30 is attached to the downstream end 20. The bellows 30 extends longitudinally through the chamber 14. A poppet 32 is attached to the bellows 30. A stem 34 of the poppet 32 fits within and is capable of gliding freely within a bore 36 in the downstream end 20 of the housing 12. A conduit 38 through the housing 12 provides a means for pressurizing the bellows 30 to a desired level. The upstream end or lower end of the poppet 32 terminates with a poppet head 40 having a circular cross-section. When the poppet head 40 is moved downward relative to the seat or housing surface 42 an annular fluid passageway 44 is formed as shown in the figure. The upper or downstream portion 46 of the poppet head 40 is tapered so as to provide a variable flow area as the bellows elongates or contracts. Surface 42 is also tapered. The area of the passageway 44 increases as the poppet head 40 is moved downward. The poppet head 40 is threaded, as shown at location 48, to the stem 34. The poppet 32 is formed with a V-groove 50 to also aid in providing the appropriate flow passageway area.

In the preferred embodiments of Fig. 1, the lower end of the poppet head 40 terminates with a shaft 52 which extends into the lower chamber 16. The lower or upstream end of the shaft 52 terminates with a guide 54. The guide 54 fits into an inlet 56 for the apparatus 10. The guide 54 has a sufficiently small cross-sectional area so as not to impede the flow of fluid through inlet 56. A bias spring 58 wound around the shaft 52 preloads the poppet 32 in an open position and biases it toward the upstream direction during operation. If, for example, this apparatus 10 were utilized with a rocket engine combustor then the spring 58 would provide the regulator with a bias force to balance against the fixed chamber pressure. The bias spring 58 opposes a spring cup 60 and an adjusting nut 62 threaded to the shaft 52.

Prior to operation of the regulator 10 the bellows is pressurized at a predetermined level. During operation, the supply fluid flows through the inlet 56 and into the lower chamber 16. The fluid then flows through the fluid passageway 44 formed between the poppet head 40 and partitioning surface 42. It then flows into the upper chamber 14. The fluid discharges through exit openings 28.

Once inside the upper chamber 14 the fluid is in heat exchange communication with the fluid within the bellows. The bellows 30 contains a fluid with the same or similar thermodynamic characteristics as the fluid being regulated. It either contracts, expands or remains stationary as a function of any changes in the pressure and/or temperature of the fluid in the upper chamber 14. Expansion or contraction of the bellows 30 results in positional changes in the poppet 32 and thus changes in the fluid passageway area. Through proper calibraton a constant mass flow rate may be achieved.

A second embodiment of the subject invention, designated generally as 62, is illustrated in Figure 2. In this embodiment, the housing 64 forms only a single chamber 66 and is welded at a single location 68. The spring bias means of the previous embodiment is absent. Supply fluid flows directly through a passageway 70 formed between housing surface 72 and the poppet head 74 of poppet 76. As in the previous embodiment, the fluid then flows into chamber 66 where it is in heat exchange communication with the fluid within bellows 80. It then exits chamber 66 through exit port 82. A bellows pressurizing conduit 84 is shown in fluid communication with a guide bore 86. Preferably, with all embodiments of the present invention a conventional pressure regulator is utilized upstream of the apparatus 10 to minimize the changes in the pressure loads operating on the poppet head.

### Example

In the scenario described in the "Background of the Invention" for the typical feed system for a fluid fueled rocket engine combustor, H₂ and O₂ are stored in tanks that are initially at 2000 psi and 200°R. During the process of propellant consumption the contents of the tanks are heated to 600°R and the tanks' pressures are decreased to 300 psi. For each propellant a conventional pressure regulator is utilized upstream of the present invention to hold the pressure of each propellant at a constant pressure of 280 psi thus minimizing the forces caused by variance of the supply pressure to the apparatus 10. The bias spring 58 of the apparatus 10 is sized to compensate for the constant chamber pressure of the rocket engine. The bellows 30 is pressurized so that the total regulated pressure of the apparatus 10 is proper for the prevailing temperature of the regulated propellant. The regulated pressure of the apparatus 10 is then controlled by the pressure in the bellows 30 plus the equivalent pressure of the bias spring 58. The regulated pressure of apparatus 10 will be adjusted by the change in bellows pressure. If at 400°R, the bias spring 58 is sized to maintain a bias pressure of 100 psid and the bellows pressurized to 80 psia, the apparatus 10 would then regulate at the total regulated pressure of 180 psia. Dropping the temperature to 200°R would drop the bellows pressure in proportion to the temperature reduction, i.e. to 40 psia (total regulated pressure of 140 psia). Increasing the temperature of the regulated gas to 600°R would cause a proportional increase in the regulated pressure of bellows 30 (i.e. to 120 psia). In this case the total regulated pressure would be 220 psia. Temperature compensation is reflected on that portion of the regulated pressure contributed by the bellows.

Calibration is carried out by flowing temperature controlled propellant through apparatus 10 at the design inlet pressure and temperature range. With the flow adjusted to planned rates, the regulation pressure of the apparatus 10 is measured and compared to the established acceptable pressure versus temperature values for the device.

## Claims

1. A propellant feed system for a bi-propellant, pressure-fed rocket engine utilizing a fuel propellant and an oxidizer propellant, said feed system for maintaining a substantially constant mass flow rate of each propellant fluid into a rocket combustor during the process of propellant consumption, each propellant fluid being stored in a respective storage tank under high pressure and low temperature for maximizing the propellant densities, each propellant tank being externally heated to increase the tank pressure, thus compensating for the pressure losses resulting from the discharge of propellant fluid therefrom, comprising a conventional pressure regulation means for regulating the pressures of the flows of said propellants being discharged from said tanks, at respective constant pressures and means (10) for self-regulating the mass flow rate of each propellant fluid after its discharge from said conventional pressure regulation means, **characterized** by a housing (12) defining a chamber (14;66) for receiving said propellant fluid, said housing having a surface forming an entrance opening (42;72) for introducing a supply of propellant fluid from said conventional pressure regulation means to said chamber (14;66) and an exit opening (28;82) for providing for discharge of the propellant fluid from said chamber (14;66);
a sealed and pressurized bellows (30;80) contained within said chamber (14;66), said bellows (30;80) being in heat exchange communication with propellant fluid flowing through said chamber, and containing a second fluid with the same or similar thermodynamic characteristics as the propellant fluid being regulated; and
a poppet (32;76) located within said chamber (14;66), said poppet (32;76) being attached to the free end of the bellows (30;80) which is fixed at its other end; and said poppet (32;76) being adapted to change its position in response to changes in the elongation of said bellows (30;80); an end of said poppet (32;76) terminating with a poppet head (40;74) which extends into said entrance opening (44;70), the housing surface forming said entrance opening (44;70) and said poppet head (40;74) cooperatively defining a fluid passageway, the area of said fluid passageway being effected by the position of the poppet head (40;74); whereby
when the mass flow rate through said chamber is effected by either a change in pressure or a change in temperature, a corresponding change takes place in said sealed bellows (30;80) thus repositioning said poppet (32;76) accordingly and resulting in a substantially constant mass flow rate of said propellant fluid to said rocket combustor.

2. The system of Claim 1 wherein said poppet head (40;74) has an upper portion which is tapered so as to provide a variable flow area as the bellows (30;80) elongates or contracts.

3. The system of Claim 2 wherein said housing surface which forms said entrance opening is tapered to facilitate the formation of said variable flow area.

4. The system of Claim 3 further including means for pressurizing said bellows.

5. The system of Claim 3 wherein said poppet head (40;74) has a circular cross-section.

6. The system of Claim 5 wherein said housing surface forming said opening is circular, the flow passageway being formed having an annular shape.

7. The system of Claim 1 further including a spring bias means (52-62) for biasing said poppet towards an open position.

8. The system of Claim 7 wherein said housing (12) further defines a second chamber (16), said second chamber (16) located adjacent the first chamber (14), said housing surface which forms said entrance opening (42) partitioning the first chamber (14) from said second chamber (16), said second chamber containing said spring bias means (52-62).

9. The system of Claim 8 wherein said spring bias means (52-62) includes:
a shaft (52) having a first end connected to said poppet head (40;74), said shaft (52) extending into said second chamber (16);
an adjusting nut (62) threaded onto a second end of said shaft (52); and
a spring (58) coaxially wound about said shaft (52), said spring (58) opposing said nut (62) at one end and opposing a portion of said housing (12) at another end.

## Patentansprüche

1. Treibstoffzuführsystem für einen mit zwei Treibstoffen betriebenen, druckgespeisten Raketenmotor, der einen Brenntreibstoff und einen Oxidationsmitteltreibstoff verwendet, wobei das Zuführsystem dazu dient, eine im wesentlichen konstante Massendurchflußrate jedes Treibstofffluids in einen Raketenbrenner während des Prozesses des Treibstoffverbrauchs beizubehalten, wobei jedes Treibstofffluid in einem jeweiligen Lagertank unter hohem Druck und niedriger Temperatur gelagert wird, um die Treibstoffdichten zu maximieren, wobei jeder Treibstofftank extern beheizt wird, um den Tankdruck zu erhöhen, um dadurch Druckverluste zu kompensieren, die aus dem Ausgeben von Treibstofffluid aus ihm herrühren, mit einer herkömmlichen Druckregeleinrichtung zum Einstellen der Drücke der Ströme der Treibstoffe, die aus den Tanks ausgegeben werden, auf jeweilige konstante Drücke, und einer Einrichtung (10) zum Selbsteinregeln der Massendurchflußrate jedes Treibstofffluids, nachdem es aus der herkömmlichen Druckregeleinrichtung ausgegeben wurde, **gekennzeichnet durch**
- ein Gehäuse (12), das eine Kammer (14; 66) zum Aufnehmen des Treibstofffluids festlegt, wobei das Gehäuse über eine Fläche verfügt, die eine Einlaßöffnung (42; 72) zum Einleiten einer Treibstofffluidversorgung aus der herkömmlichen Druckregeleinrichtung in die Kammer (14; 66), und eine Auslaßöffnung (28; 82) bildet, die dafür sorgt, das Treibstofffluid aus der Kammer (14; 66) auszugeben;
- einen abgedichteten und unter Druck stehenden Balg (30; 80) innerhalb der Kammer (14; 66), wobei der Balg (30; 80) in Wärmeaustauschverbindung mit dem durch die Kammer strömenden Treibstofffluid steht und ein zweites Fluid mit denselben oder ähnlichen thermodynamischen Eigenschaften wie das eingestellte Treibstofffluid enthält; und
- ein innerhalb der Kammer (14; 66) angeordnetes Tellerventil (32; 76), das am freien Ende des Balgs (30; 80) befestigt ist, der an seinem anderen Ende befestigt ist; wobei das Tellerventil (32; 76) so ausgebildet ist, daß es seine Position auf Änderungen der Längserstreckung des Balgs (30; 80) ändert; wobei ein Ende des Tellerventils (32; 76) in einem Tellerventilkopf (40; 74) endet, der sich in die Einlaßöffnung (44; 70) hinein erstreckt, wobei die diese Einlaßöffnung (44; 70) bildende Gehäusefläche und der Tellerventilkopf (40; 74) gemeinsam eine Fluidpassage festlegen, deren Fläche durch die Position des Tellerventilkopfs (40; 74) beeinflußt wird;
- wobei dann, wenn die Massendurchflußrate durch die Kammer entweder durch eine Änderung des Drucks oder eine Änderung der Temperatur beeinflußt wird, eine entsprechende Änderung im abgedichteten Balg (30; 80) stattfindet, wodurch das Tellerventil (32; 76) entsprechend neu positioniert wird, was zu einer im wesentlichen konstanten Massendurchflußrate des Treibstofffluids zum Raketenbrenner führt.

2. System nach Anspruch 1, bei dem der Tellerventilkopf (40; 74) einen oberen, abgeschrägten Abschnitt aufweist, um für variable Durchflußfläche zu führen, wenn sich der Balg (30; 80) zusammenzieht oder streckt.

3. System nach Anspruch 2, bei dem die die Einlaßöffnung bildende Gehäusefläche abgeschrägt ist, um die Ausbildung der variablen Durchflußfläche zu erleichtern.

4. System nach Anspruch 3, das ferner eine Einrichtung aufweist, die dazu dient, den Balg unter Druck zu setzen.

5. System nach Anspruch 3, bei dem der Tellerventilkopf (40; 74) kreisförmigen Querschnitt aufweist.

6. System nach Anspruch 5, bei dem die die Öffnung bildende Gehäusefläche kreisförmig ist, wodurch die gebildete Strömungspassage Ringform aufweist.

7. System nach Anspruch 1, ferner mit einer Vorbelastungsfedereinrichtung (52 - 62) zum Vorbelasten des Tellerventils auf eine offene Position.

8. System nach Anspruch 7, bei dem das Gehäuse (12) ferner eine zweite Kammer (16) festlegt, die benachbart zur ersten Kammer (14) liegt, wobei die die Einlaßöffnung (42) bildende Gehäusefläche die erste Kammer (14) gegenüber der zweiten Kammer (16) abtrennt, die die Federbelastungseinrichtung (52 - 62) enthält.

9. System nach Anspruch 8, bei dem die Federvorbelastungseinrichtung (52 - 62) folgendes aufweist:
- einen Schaft (52) mit einem ersten Ende, das mit dem Tellerventilkopf (40; 74) verbunden ist und sich in die zweite Kammer (16) erstreckt;
- eine auf das zweite Ende des Schafts (52) aufgeschraubte Einstellmutter (62); und
- eine koaxial um den Schaft (52) gelegte Feder (58), die der Mutter (62) an einem Ende und einem Abschnitt des Gehäuses (12) am anderen Ende gegenübersteht.

## Revendications

1. Système d'alimentation de propergol pour un moteur fusée bi-propergol alimenté sous pression utilisant un propergol combustible et un propergol oxydant, ledit système d'alimentation étant destiné à maintenir un débit massique sensiblement constant de chaque fluide propergol dans une chambre de combustion de fusée pendant le processus de consommation des propergols, chaque fluide propergol étant stocké dans un réservoir de stockage respectif sous haute pression et à basse température pour porter au maximum les densités des propergols, chaque réservoir de propergol étant chauffé extérieurement pour accroître la pression du réservoir, en compensant ainsi les pertes de pression qui résultent de la sortie du fluide propergol hors de ce réservoir, comprenant des moyens de régulation de pression classiques servant à régler sur des valeurs respectives constantes les pressions des flux desdits propergols qui sont déchargés desdits réservoirs, et des moyens (10) servant à auto-régler le débit massique de chaque fluide propergol après sa sortie desdits moyens de régulation de pression classiques, caractérisé par un logement (12) définissant une chambre (14 ; 66) destinée à recevoir ledit fluide propergol, ledit logement ayant une surface formant une ouverture d'entrée (42 ; 72) pour introduire une alimentation de fluide propergol issue desdits moyens de régulation classiques dans ladite chambre (14 ; 66) et une ouverture de sortie (28 ; 82) servant à assurer la sortie du fluide propergol hors de ladite chambre (14 ; 66) ; un soufflet (30 ; 80) étanche et mis sous pression, contenu dans ladite chambre (14 ; 66), ledit soufflet (30 ; 80) étant en communication pour l'échange de chaleur avec le fluide propergol qui traverse ladite chambre, et contenant un second fluide possédant des caractéristiques thermodynamiques identiques ou analogues à celles du fluide propergol qu'il s'agit de régler ; et
une soupape (32 ; 76) logée dans ladite chambre (14 ; 66), ladite soupape (32 ; 76) étant fixée à l'extrémité libre du soufflet (30 ; 80) qui est fixe à son autre extrémité ; et ladite soupape (32 ; 76) étant adaptée pour changer de position en réponse aux variations de l'allongement dudit soufflet (30 ; 80) ; une extrémité de ladite soupape (32 ; 76) se terminant par une tête de soupape (40 ; 74) qui pénètre dans ladite ouverture d'entrée (44 ; 70), la surface du logement qui forme ladite ouverture d'entrée (44 ; 70) et ladite tête (40 ; 74) de la soupape définissant un passage de fluide en coopération, la surface de section dudit passage de fluide étant affectée par la position de la tête (40 ; 74) de la soupape ; de sorte que
lorsque le débit massique traversant ladite chambre est affecté par une variation de pression ou une variation de température, il se produit une variation correspondante dans ledit soufflet étanche (30 ; 80), ce qui modifie la position de ladite soupape (32 ; 76) de façon correspondante et se traduit par un débit sensiblement constant dudit fluide propergol arrivant à la chambre de combustion de la fusée.

2. Système selon la revendication 1, dans lequel ladite tête (40 ; 74) de soupape possède une portion supérieure qui est à pente de manière à donner naissance à une section d'écoulement variable lorsque le soufflet (30 ; 80) s'allonge ou se contracte.

3. Système selon la revendication 2, dans lequel ladite surface du logement qui forme ladite ouverture d'entrée est à pente pour faciliter la formation de ladite section d'écoulement variable.

4. Système selon la revendication 3, comprenant en outre des moyens pour mettre ledit soufflet sous pression.

5. Système selon la revendication 3, dans lequel ladite tête (40 ; 74) du soufflet possède une section circulaire.

6. Système selon la revendication 5, dans lequel ladite surface du boitier qui forme ladite ouverture est circulaire, le passage d'écoulement formé ayant une forme annulaire.

7. Système selon la revendication 1, comprenant en outre un moyen de sollicitation à ressort (52-62) servant à pousser ladite soupape vers une position ouverte.

8. Système selon la revendication 7, dans lequel ledit logement (12) définit en outre une seconde chambre (16), ladite seconde chambre (16) étant placée adjacente à ladite première chambre (14), ladite surface du logement qui forme ladite ouverture d'entrée (42) isolant ladite première chambre (14) de ladite seconde chambre (16), ladite seconde chambre contenant ledit moyen de sollicitation à ressort (52-62).

9. Système selon la revendication 8, dans lequel ledit moyen de sollicitation à ressort (52-62) comprend :
une tige (52) ayant une première extrémité reliée à ladite tête (40 ; 74) de la soupape, ladite tige (52) pénétrant dans ladite seconde chambre (16) ;
un écrou de réglage (62) vissé sur ladite seconde extrémité de ladite tige (52) ; et
un ressort (58) enroulé coaxialement autour de ladite tige (52), ledit ressort (58) s'appuyant sur ledit écrou (62) à une extrémité et s'appuyant sur une portion dudit logement (12) à une autre extrémité.
